# EUROPÄISCHE PATENTSCHRIFT

(11) **EP 2 937 318 B1**
(45) Veröffentlichungstag und Bekanntmachung des Hinweises auf die Patenterteilung: **25.03.2020**
(21) Anmeldenummer: 15163720.4
(22) Anmeldetag: 15.04.2015
(51) Int. Cl.: C02F 9/02, C02F 1/28, C02F 1/38, C02F 1/40, C02F 101/32, C02F 101/20, C02F 103/00

(54) **REINIGUNGSVORRICHTUNG ZUR REINIGUNG EINES FLUIDS UMFASSEND EINE EINRICHTUNG ZUM SEDIMENTIEREN UND EINE EINRICHTUNG ZUM ADSORBIEREN**
CLEANING APPARATUS FOR CLEANING A FLUID COMPRISING A DEVICE FOR SEDIMENTATION AND A DEVICE FOR ADSORPTION
INSTALLATION DE NETTOYAGE D'UN FLUIDE COMPRENANT UN DISPOSITIF DE SÉDIMENTATION ET UN DISPOSITIF D'ADSORPTION

(30) Priorität: 16.04.2014 DE 202014101820 U
(43) Veröffentlichungstag der Anmeldung: 28.10.2015
(73) Patentinhaber: REHAU AG + Co, 95111 Rehau (DE)
(72) Erfinder: Stadthalter, Peter, 96152 Burghaslach (DE); Warnfried, Baumann, 91315 Höchstadt/Aisch (DE); Schön, Martin, 91301 Forchheim (DE)

(56) Entgegenhaltungen:
- EP-A1- 2 085 527
- DE-A1- 4 216 961
- DE-A1-102010 040 645
- DE-U1- 29 613 280
- DE-U1-202011 100 486
- FR-A1- 2 907 022

## Beschreibung

Die Erfindung betrifft eine Reinigungsvorrichtung zur Reinigung eines Fluids und eine Fluidaufnahme-, -leit- und -reinigungseinrichtung mit einer solchen Reinigungsvorrichtung zur Reinigung eines Fluids.

Fluide, die an den unterschiedlichsten Stellen anfallen und teilweise mit verschiedenen Stoffen verschmutzt beziehungsweise belastet sind, bedürfen einer aufwendigen Reinigung, um diese dann geordnet abzuführen oder weiterzuverwenden. So enthält beispielsweise Regenwasser neben mitgeführtem Schmutz auch sedimentierbare Verunreinigungen wie Sand und Blütenpollen, oder mitgeschwemmte Stoffe, wie Mineralölkohlenwasserstoffe, aber auch Ionen und insbesondere Schwermetallionen sind darin zu finden.

Auf Grund der Giftigkeit von Schwermetallionen sind insbesondere diese vor einer Ableitung des Regenwassers in die Kanalisation oder in einen Vorfluter nach den einschlägigen Vorgaben zu entfernen.

Aus dem Stand der Technik sind dazu teilweise sehr komplexe Vorrichtungen bekannt, die eine Reinigung von Fluiden und insbesondere des Regenwassers ermöglichen.

Aus dem Stand der Technik ist die Druckschrift DE 10 2010 040 645 A bekannt, aus der eine Abwasserbehandlungsvorrichtung hervorgeht, die einen Abwasserzulauf und einen Abwasserablauf umfasst und eine Filtereinrichtung, die strömungstechnisch zwischen dem Abwasserzulauf und dem Abwasserablauf angeordnet ist, wobei die Filtereinrichtung ein Gehäuse aufweist, in dem ein Filtermedium zum Ad- und / oder Absorbieren von Fremdstoffen aus dem Abwasser aufgenommen ist.

Derartige Vorrichtungen sind aufwendig zu bauen, lassen sich nur schwer an die zu reinigende Menge an Fluid anpassen, das in ihnen befindliche Filtermaterial ist nur mit Aufwand auszutauschen und die Wartung und Inspektion bereiten Mühe. Ein weiterer Nachteil besteht darin, dass bei Starkregenereignissen oder bei einem sehr großen Volumen an Fluid, das der Vorrichtung zuströmt, das Fluid ohne dass eine Reinigung erfolgt, die Vorrichtung passiert, weil es beispielsweise an den Einrichtungen zur Reinigung vorbeiströmt.

Hier setzt die Erfindung ein, die es sich zur Aufgabe gemacht hat, die vorbezeichneten Nachteile zu überwinden und eine gegenüber dem Stand der Technik verbesserte Reinigungsvorrichtung zur Reinigung eines Fluids anzugeben.

Erfindungsgemäß wird dies durch die im kennzeichnenden Teil des Anspruchs 1 angegebenen Merkmale gelöst.

Weitere vorteilhafte Ausgestaltungen der Erfindung sind in den Unteransprüchen angegeben.

Die Lösung der Aufgabe erfolgt gemäß Anspruch 1:
Im Rahmen der Erfindung wurde erkannt, dass eine Reinigungsvorrichtung zur Reinigung eines Fluids die oben genannten Nachteile überwindet, wenn diese eine Einrichtung zum Sedimentieren von in dem Fluid enthaltenen sedimentierbaren Stoffen und zum Abscheiden von in dem Fluid enthaltenen aufschwimmenden Stoffen, die eine Zuleiteinrichtung für das Fluid, eine Kammer zum Sedimentieren von in dem Fluid enthaltenen sedimentierbaren Stoffen und zum Abscheiden von in dem Fluid enthaltenen aufschwimmenden Stoffen und eine Ableiteinrichtung für das Fluid umfasst, durch die das Fluid aus der dritten Kammer ausströmt, wobei die zweite Kammer ein Mittel enthält, Stoffe, insbesondere Ionen, aus dem Fluid zu entfernen.
Die Reinigungsvorrichtung der vorliegenden Erfindung zeichnet sich dadurch aus, dass die zweite Kammer in einem hohlzylindrischen Gehäuse eingebaut ist, wobei sich die erste Wand und die zweite Wand von einer Innenseite des Gehäuses über die Achse des Hohlzylinders hinaus bis zur gegenüberliegenden Seite erstrecken, dass eine Einrichtung vorgesehen ist, so dass das Fluid bei einem Stauereignis nicht von der ersten Kammer in die dritte Kammer strömt, ohne die zweite Kammer durchströmen und mit dem Mittel in Kontakt zu kommen, wobei besagte Einrichtung ein fluiddichter Verschluss ist, der an der oberen Deckfläche der ersten Kammer angeordnet ist und diese an ihrer oberen Deckfläche verschließt und/oder die Einrichtung ein fluiddichter Verschluss ist, der an der oberen Deckfläche der dritten Kammer angeordnet ist und jene an ihrer oberen Deckfläche verschließt, und zeichnet sich weiterhin dadurch aus, dass die erste Wand derart ausgeführt ist, dass das Fluid das Mittel in der zweiten Kammer dann durchströmt, wenn die zweite Kammer mit dem Mittel vorgegeben beladen ist.

Eine Reinigungsvorrichtung der vorbezeichneten erfindungsgemäßen Ausführung weist einen kompakten Aufbau auf, kann in einfacher Weise an die zu reinigende Menge des Fluids angepasst werden, besitzt einen geringen Druckverlust bei der Durchströmung der Reinigungsvorrichtung durch das Fluid, ermöglicht es in einfacher Weise, das Mittel auszutauschen und eine unkomplizierte Wartung und Inspektion vorzunehmen, weist ein geringes Gewicht auf und ist kostengünstig herzustellen.
Insbesondere kann bei der erfindungsgemäßen Reinigungsvorrichtung nicht der Fall eintreten, dass unerwünscht ein Fluid ohne dass es gereinigt ist, die Vorrichtung durchströmt.
In einer bevorzugten Ausgestaltung der Erfindung ist das in der zweiten Kammer der Einrichtung zum Entfernen bzw. Adsorbieren enthaltene Mittel zur physikalisch-chemischen Entfernung, insbesondere zur Adsorption von Stoffen, ein Granulat, insbesondere ein Granulat auf Basis eines Oxids und/oder Hydroxids, insbesondere des Siliciums, des Eisens, des Mangans, oder des Aluminiums, oder ein Granulat auf Basis eines kohlehaltigen Materials, oder ein Granulat auf Basis eines Tonminerals, oder ein Granulat auf Basis eines Zeoliths, oder ein Granulat auf Basis einer Mischung der vorgenannten.
Ein solches Granulat ermöglicht es in ganz besonders günstiger Weise, Stoffe, insbesondere Ionen, die in dem Fluid gelöst sind, zu entfernen bzw. adsorbieren, das heißt zu binden und damit aus dem Fluid zu entfernen.
Auf diese Weise weist die erfindungsgemäße Reinigungsvorrichtung eine besonders hohe Reinigungsleistung auf.
Im Rahmen der Erfindung ist dazu vorgesehen, dass das Mittel zur Entfernung bzw. Adsorption von Stoffen in der zweiten Kammer lose eingebracht, das heißt in einer losen Schüttung in der zweiten Kammer angeordnet ist oder in einem in die zweiten Kammer einführbaren und aus der zweiten Kammer entnehmbaren Behältnis mit von dem Fluid durchströmbaren Seitenwänden angeordnet ist.
Ein solches Behältnis kann beispielsweise ein korbartiges Gebilde oder eine Kassette sein, die entsprechend mit von dem Fluid durchströmbaren Seitenwänden ausgestattet ist.
In diesem Behältnis ist das Mittel zur Entfernung bzw. Adsorption von Stoffen eingefüllt. Zur Kontrolle oder zum Auswechseln des Mittels kann das Behältnis dabei in einfacher Weise aus der Kammer entnommen werden, nach der Inspektion oder Wartung oder Reinigung oder des Austauschs des Mittels kann das Behältnis wieder in die zweite Kammer eingeführt werden.
Das Behältnis ist dabei so gestaltet, dass das Fluid zwangsweise das Behältnis durchströmt und mit dem Mittel in Kontakt kommt.
Dazu kann beispielsweise randseitig an dem Behältnis eine Vorrichtung vorgesehen sein, eine Dichtwirkung innerhalb der zweiten Kammer zu deren Wänden herzustellen, damit das Fluid nicht in unerwünschter Weise an dem Behältnis mit dem Mittel vorbeiströmt und das Mittel dadurch keine Reinigungswirkung entfalten kann.
Es kann weiterhin von Vorteil sein, wenn mehrere Behältnisse vorgesehen sind, die entweder übereinander angeordnet sind oder nebeneinander im Sinne einer Palisadenanordnung, wobei die einzelnen Behältnisse insbesondere mittels einer Nut-Feder-Verbindungstechnik ineinandergreifen bzw. miteinander gekoppelt sind, vorliegen.
Bei einer losen Einbringung des Mittels als Schüttung in der zweiten Kammer kann vorteilhaft vorgesehen sein, dass auf der Oberfläche der Schüttung ein inertes Ballastmaterial, beispielsweise in Form von Kies, aufgebracht ist, um das Mittel etwas zu verdichten und die Oberfläche der Schüttung auf diese Weise zu schützen.
In einer besonderen Ausgestaltung der Erfindung kann vorgesehen sein, dass die zweite Kammer in zwei oder mehr Teilkammern unterteilt ist, was in einfacher Weise mit Wänden, die Öffnungen aufweisen, realisierbar ist. In diesen Teilkammern können unterschiedliche Mittel zur Entfernung bzw. Adsorption von Stoffen eingebracht werden. Auf diese Weise kann eine an die jeweilige Gegebenheit angepasste Wahl an Mitteln erfolgen, wodurch eine verbesserte Reinigungsleistung der Reinigungsvorrichtung zur Reinigung eines Fluids resultiert.
In einer Abwandlung der vorliegenden Erfindung kann vorgesehen sein, dass wenigstens ein Filter, insbesondere eine Filterplatte oder ein Vlies derart in der zweiten Kammer angeordnet ist, dass dieser in der zweiten Kammer der ersten und/oder der zweiten Wand zugewandt ist. Dadurch erfolgt in vorteilhafter Weise eine Feinreinigung des die zweite Kammer durchströmenden Fluids, indem feine bzw. feinste Teilchen aus dem Fluid entfernt werden, was wiederum die Reinigungsleistung der Vorrichtung verbessert.
Die vorstehend beschriebenen Abwandlungen können natürlich auch untereinander kombiniert zum Einsatz kommen.
Wie bereits oben beschrieben weist die Einrichtung zum Entfernen bzw. Adsorbieren eine Einrichtung auf, die dafür sorgt, dass das Fluid bei einem Stauereignis nicht von der ersten Kammer in die dritte Kammer strömt, ohne die zweite Kammer zu durchströmen und mit dem Mittel in Kontakt zukommen. Im Rahmen der vorliegenden Erfindung stellt diese Maßnahme sicher, dass das gesamte der Reinigungsvorrichtung zuströmende Fluid das Mittel passiert, also entsprechend gereinigt wird.
Bei der vorliegenden Erfindung ist vorgesehen, dass die Einrichtung ein fluiddichter Verschluss ist, der an der oberen Deckfläche der ersten Kammer der Einrichtung zum Entfernen bzw. Adsorbieren angeordnet ist und diese an ihrer oberen Deckfläche verschließt.
In einer alternativen Ausführung ist die Einrichtung ein fluiddichter Verschluss, der an der oberen Deckfläche der dritten Kammer der Einrichtung zum Entfernen bzw. Adsorbieren angeordnet ist und diese an ihrer oberen Deckfläche verschließt.
Es ist im Rahmen der Erfindung auch möglich, sowohl die erste Kammer als auch die dritte Kammer jeweils an ihrer oberen Deckfläche mit einem derartigen fluiddichten Verschluss auszustatten, so dass diese an ihren oberen Deckflächen verschlossen sind.
Hierdurch wird in einfacher Weise bewerkstelligt, das ein in einer großen Menge zuströmendes Fluid nicht unkontrolliert von der ersten in die dritte Kammer strömen kann, ohne die zweite Kammer und das Mittel zur Reinigung des Fluids zu passieren.
In einer Ausführungsform außerhalb der Erfindung kann die Einrichtung die erste Wand der Einrichtung zum Entfernen bzw. Adsorbieren sein, die eine Höhenerstreckung oberhalb des Fluidspiegels aufweist, die das 0,5- bis 5,0-fache des Abstandes zwischen der ersten Wand und der zweiten Wand beträgt.
Alternativ kann in einer Ausführungsform außerhalb der Erfindung die Einrichtung auch die zweite Wand der Einrichtung zum Entfernen bzw.
Adsorbieren sein, die eine Höhenerstreckung oberhalb des Fluidspiegels aufweist, die das 0,5- bis 5,0-fache des Abstandes zwischen der ersten Wand und der zweiten Wand beträgt. Es ist in einer Ausführungsform außerhalb der Erfindung auch möglich, dass sowohl die erste Wand, wie auch die zweite Wand jeweils eine Höhenerstreckung oberhalb des Fluidspiegels aufweisen, die das 0,5- bis 5,0-fache des Abstandes zwischen der ersten Wand und der zweiten Wand beträgt.
Die Reinigungsvorrichtung gemäß vorliegender Erfindung ist dann in besonders vorteilhafter Weise ausgeführt, wenn die erste Wand und die zweite Wand der Einrichtung zum Entfernen bzw. Adsorbieren zumindest in einem Abschnitt Öffnungen aufweist, wobei der Abschnitt der ersten und zweiten Wand mit den Öffnungen so angeordnet ist, das bei einer Beladung der zweiten Kammer mit dem Mittel bis zu einer vorgegeben Beladungsmenge oder bis zu einer Beladungsmarkierung das die zweite Kammer durchströmende Fluid mit dem Mittel in Kontakt kommt.
Hierdurch wird in einfacher Weise erreicht, dass das Fluid bei seinem Weg durch die zweite Kammer nicht in unerwünschter Weise an dem Mittel vorbeiströmt ohne mit diesem in Kontakt zu gelangen.
So kann es beispielsweise durch Setzungserscheinungen oder durch einen mechanischen Zerfall des Granulats dazu kommen, dass das Granulat nach einiger Zeit ein kleineres Volumen einnimmt, als ursprünglich bei der Beladung.
Dies kann den Nachteil mit sich bringen, dass das Fluid durch einen so gebildeten Freiraum ohne mit dem Mittel in Kontakt zu kommen an diesem vorbeiströmt, was in hohem Grade unterwünscht ist.
Die vorgenannte Maßnahme beugt dem vor, indem die zweite Kammer mit dem Mittel derartig beladen wird, dass einem solchen Ereignis von vornherein Rechnung getragen wird. In diesem Zusammenhang kann auch vorgesehen sein, dass das Mittel in einem bestimmten Volumen oder in einer bestimmten Masse in die zweite Kammer einzubringen ist, um sicherzustellen, dass die vorstehend beschriebene Maßnahme greift.
Vorteilhaft kann dazu beispielsweise ein abgepacktes Mittel, d. h. ein Mittel in einem Behältnis, wie einem Sack oder einem Eimer, herangezogen werden, das bei der Abpackung hinsichtlich des Volumens und / oder der Masse der Vorgabe entspricht. Auf diese Weise ist eine Befüllung der zweiten Kammer in einfacher Weise möglich, wobei ohne weiteren Aufwand die vorgegebene Beladungsmenge eingebracht wird oder die zweite Kammer bis zu einer Beladungsmarkierung mit dem Mittel beladen wird.
Es hat sich bei der vorliegenden Erfindung als besonders günstig herausgestellt, wenn vorgesehen ist, dass an der Zuleiteinrichtung der Einrichtung zum Sedimentieren und Abscheiden und/oder in der ersten Kammer ein Grobfilter angeordnet ist, der dafür sorgt, das Schmutz bis zu einer gewissen Größe, der im Fluid vorhanden ist, zurückgehalten werden kann. Es kann sich hierbei beispielsweise um Blätter und anderes organische Material, oder kleine Steinchen oder ähnliches handeln, welches das Regenwasser mit sich führt.
Sehr vorteilhaft ist auch ein Drosselelement, das an der Ableiteinrichtung der Einrichtung zum Entfernen bzw. Adsorbieren angeordnet ist. Mit solch einem Drosselelement kann der Abfluss des Fluids aus der dritten Kammer über die Ableiteinrichtung vorgegeben werden. Damit lässt sich auch bestimmen, wie lang das Fluid mit dem Mittel in Kontakt kommt, womit die Reinigungswirkung vorgegeben werden kann.
Ebenfalls vorteilhaft ist auch ein Drosselelement, das an der Zuleiteinrichtung der Einrichtung zum Sedimentieren und Abscheiden angeordnet ist. Mit solch einem Drosselelement kann der Zufluss des Fluids zur der Vorrichtung vorgegeben werden. Damit lässt sich auch bestimmen, welcher Anteil des insgesamt anfallenden Fluids durch die Reinigungsvorrichtung geleitet und gereinigt wird. Der restliche Anteil kann beispielsweise zwischengespeichert werden oder fließt durch einen Bypass an der Reinigungsvorrichtung zur Reinigung eines Fluids vorbei.
In einer günstigen Weiterentwicklung der vorliegenden Erfindung kann vorgesehen sein, dass Einrichtungen angeordnet sind, die Strömungsrichtung des durch die Zuleiteinrichtung in die erste Kammer einströmenden Fluids und/oder des durch die Ableiteinrichtung aus der dritten Kammer ausströmenden Fluids abzulenken. Mit solchen Einrichtungen zur Ablenkung der Strömungsrichtung des Fluids kann in vorteilhafterweise eine Beruhigung und Vergleichmäßigung des Flusses des Fluids durch die Reinigungsvorrichtung zur Reinigung eines Fluids erreicht werden.
In einer weiteren vorteilhaften Ausführungsform der vorliegenden Erfindung kann die Reinigungsvorrichtung zur Reinigung eines Fluids derart gestaltet sein, dass Einrichtungen vorgesehen sind, durch die die Kammern zugänglich sind. Solche Einrichtungen können beispielsweise Öffnungen, die mit einem Verschlusselement verschließbar sind oder Stutzen oder ähnliche Konstruktionen sein, durch die die Kammern zugänglich sind. Damit ist es einfach, in die Kammern zu gelangen, um diese beispielsweise zu inspizieren, zu warten, zu reinigen oder zu reparieren.

Weiterhin kann damit in einfacher Weise das Mittel, das in der zweiten Kammer angeordnet ist, ausgetauscht werden.
So kann durch eine Öffnung in der zweiten Kamer das Mittel beispielsweise mithilfe einer Saugeinrichtung abgesaugt werden oder mithilfe einer Spüleinrichtung beispielsweise gesäubert werden.
Mit großem Vorteil ist die Reinigungsvorrichtung zur Reinigung eines Fluids derartig ausgebildet, dass die Zuleiteinrichtung, die Wand der Kammer und die Ableiteinrichtung der Einrichtung zum Sedimentieren, sowie das den Behälter bildende Gehäuse, die Zuleiteinrichtung, die erste Wand, die zweite Wand und die Ableiteinrichtung der Einrichtung zum Entfernen bzw. Adsorbieren ein Polymermaterial enthalten oder aus einem Polymermaterial bestehen. Das Polymermaterial ist in diesem Zusammenhang bevorzugt ein thermoplastisches Polymermaterial, insbesondere ein Polyolefin, und ganz besonders bevorzugt ein Polypropylen, ein Polyethylen oder ein Polybutylen oder ein Copolymeres oder ein Blend oder eine Mischung der vorgenannten Polymermaterialien.
Eine solche Reinigungsvorrichtung, deren wesentliche Elemente ein Polymermaterial enthalten oder aus einem Polymermaterial bestehen, ist leicht, dauerhaft, inert gegen den Angriff der meisten in einem Fluid vorhandenen Stoffe, einfach installierbar und kostengünstig. Insbesondere können die Elemente, die die Reinigungsvorrichtung bilden mit einfachen Techniken hergestellt und zusammengefügt werden.
Die Aufgabe, eine Fluidaufnahme-, -leit- und -reinigungseinrichtung bereitzustellen, findet ihre Lösung in Anspruch 7.
Im Rahmen der vorliegenden Erfindung wurde erkannt, dass eine Fluidaufnahme-, -leit- und -reinigungsvorrichtung dann besonders einfach und effizient in ihrer Reinigungsleistung ist, wenn diese eine Reinigungsvorrichtung der vorgenannten Art zur Reinigung eines Fluids umfasst.
Die vorliegende Erfindung kann in vielfältiger Weise abgewandelt werden.
So kann beispielsweise vorgesehen werden, dass die Zuleiteinrichtung sowohl senkrecht am Gehäuse der Reinigungsvorrichtung zur Reinigung eines Fluids anordenbar ist, wie auch dass diese tangential zum Gehäuse ausgerichtet ist.
Im ersten Fall strömt das zufließende Fluid direkt durch die Zuleiteinrichtung in die Kammer, im zweiten Fall wird der Strom des zufließenden Fluids zunächst an der Innenoberfläche des Gehäuses abgebremst und verliert dadurch beim Eintritt in die erste Kammer Energie. Weiterhin können auch Einrichtungen vorgesehen sein, um sedimentierbare Stoffe abzuscheiden, wie beispielsweise ein Hydrozyklon bzw. ein hydrodynamischer Abscheider, der zwischen der Zuleiteinrichtung und der ersten Kammer derart angeordnet ist, dass sich aus dem zuströmenden Fluid zunächst im Hydrozyklon bzw. im hydrodynamischen Abscheider sedimentierbare Teilchen absetzen.
Andere Fortentwicklungen der Erfindung betreffen beispielsweise die Anordnung der zweiten Kammer, die durch zwei Wände zur ersten und zu dritten Kammer hin begrenzt ist. Bevorzugt ist die zweite Kammer in einem hohlzylindrischen Gehäuse eingebaut, wobei sich die beiden Wände von einer Innenseite des Gehäuses etwa über die Achse des Hohlzylinders hinaus bis zu gegenüberliegenden Seite erstrecken.
Es ist auch möglich in Abwandlungen hiervon die zweite Kammer in etwa V-förmig oder bogenförmig zu gestalten, da sich hierdurch ein größeres Volumen der zweiten Kammer und größere An- und Abströmflächen an den die zweite Kammer begrenzenden Wänden ergeben können.
Es ist ebenso möglich, die Zuleit- und die Ableiteinrichtung in unterschiedlichen Höhenebenen anzuordnen.
Die erfindungsgemäße Reinigungsvorrichtung zur Reinigung eines Fluids wird bevorzugt unter der Erde eingebaut.
Die Reinigungsvorrichtung zur Reinigung eines Fluids gemäß vorliegender Erfindung kann modular aufgebaut sein, indem das Gehäuse beispielsweise aus einem Bodenteil besteht, auf den fluiddicht ein beispielsweise etwa hohlzylindrisches Bauteil aufgesetzt ist, das je nach Notwendigkeit mit weiteren etwa hohlzylindrischen Bauteilen nach oben hin verlängert werden kann und als oberes Ende ein Kopf- beziehungsweise ein Abschlussstück aufweist. Das Kopf- beziehungsweise Abschlussstück kann mit einem Mannloch versehen sein, um den Zugang zur Reinigungsvorrichtung zu schaffen.
Das Zusammensetzen der einzelnen Teile kann beispielsweise in einem Stecksystem unter Nutzung von Dichtungen oder in einem Stecksystem unter Nutzung von Klebeverbindungen und/oder von Schweißverbindungen geschehen.
Die Einbauten in die Reinigungsvorrichtung in Form der Zuleiteinrichtung, der Wände, der Ableiteinrichtung und ggf. weiterer Einrichtungen kann in einfacher Weise durch Bohr-, Säge-, Fräs-, Nut-, Schweiß- und Klebetechniken vorgenommen werden, so dass die Reinigungseinrichtung in einfacher Weise und kostengünstig herstellbar ist.
Anwendung findet die Reinigungsvorrichtung zur Reinigung eines Fluids gemäß vorliegender Erfindung beispielsweise bei der Reinigung des von Verkehrswegen und von Dachflächen, insbesondere von Metalldächern, abfließenden Regenwassers, in Kläranlagen, Schwimmbädern, in der Industrie und bei der dezentralen Behandlung von Fluiden, die verschmutzt sind.

Auch bei der Trinkwassergewinnung und -bereitung kann die Reinigungsvorrichtung zur Reinigung eines Fluids vorteilhaft eingesetzt werden, um damit beispielsweise Eisen, Mangan und andere Ionen soweit aus dem Wasser zu entfernen, dass dieses den einschlägigen Vorschriften genügt.
Weitere wichtige Merkmale und Vorteile der Erfindung ergeben sich aus den Unteransprüchen, aus den Fig. und aus der zugehörigen Figurenbeschreibung.
Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

Hierzu zeigt:
- Fig. 1: eine schematische Querschnittsansicht eines ersten Ausführungsbeispiels der Reinigungsvorrichtung;
- Fig. 2: eine schematische Querschnittsansicht eines zweiten Ausführungsbeispiels der Reinigungsvorrichtung;
- Fig. 3: eine schematische Querschnittsansicht eines ersten Ausführungsbeispiels der Einrichtung zum Entfernen bzw. Adsorbieren;
- Fig. 4: eine schematische geschnittene Aufsicht auf eine Einrichtung zum Entfernen bzw. Adsorbieren gemäß eines ersten Ausführungsbeispiels;
- Fig. 5: eine schematische Querschnittsansicht eines zweiten Ausführungsbeispiels außerhalb der Erfindung der Einrichtung zum Entfernen bzw. Adsorbieren;
- Fig. 6: eine schematische geschnittene Aufsicht auf eine Einrichtung zum Entfernen bzw. Adsorbieren gemäß eines zweiten Ausführungsbeispiels außerhalb der Erfindung;
- Fig. 7: eine schematische Querschnittsansicht eines dritten Ausführungsbeispiels der Einrichtung zum Entfernen bzw. Adsorbieren;
- Fig. 8: eine schematische geschnittene Aufsicht auf eine Einrichtung zum Entfernen bzw. Adsorbieren gemäß eines dritten Ausführungsbeispiels.

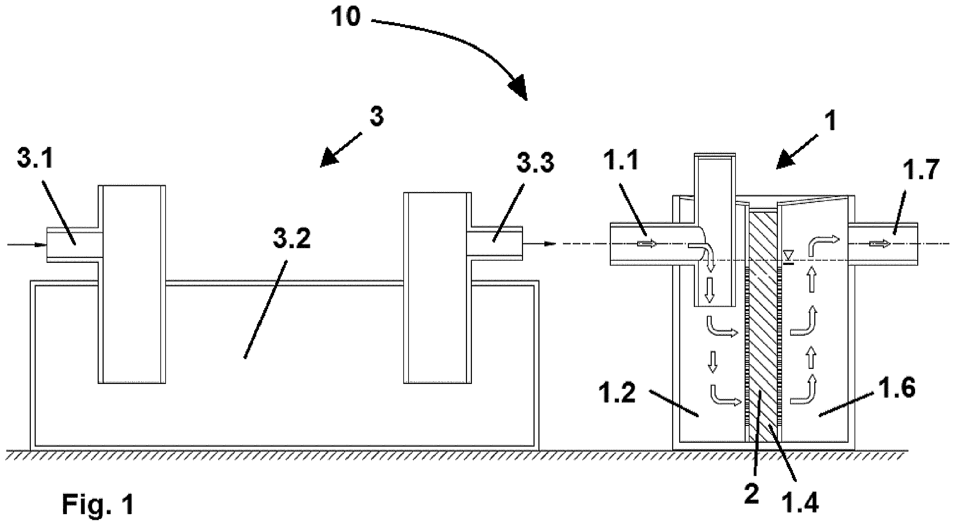

In Fig. 1 ist in einer schematischen Querschnittsansicht die Reinigungsvorrichtung 10 zur Reinigung eines Fluids in einem ersten Ausführungsbeispiel gemäß vorliegender Erfindung gezeigt.
Die Reinigungsvorrichtung 10 umfasst eine Einrichtung 3 zum Sedimentieren von in dem Fluid enthaltenen sedimentierbaren Stoffen und zum Abscheiden von in dem Fluid enthaltenen aufschwimmenden Stoffen und eine Einrichtung 1 zum Entfernen bzw. Adsorbieren. Die Einrichtung 3 zum Sedimentieren und Abscheiden umfasst eine Zuleiteinrichtung 3.1 für das Fluid, eine Kammer 3.2 zum Sedimentieren von in dem Fluid enthaltenen sedimentierbaren Stoffen und zum Abscheiden von in dem Fluid enthaltenen aufschwimmenden Stoffen und eine Ableiteinrichtung 3.3 für das Fluid.
Es kann vorgesehen sein - was aber hier nicht weiter gezeigt ist - dass in der Kammer 3.2 zum Sedimentieren von in dem Fluid enthaltenen sedimentierbaren Stoffen Einrichtungen vorgesehen sind, den Weg des Fluids durch die Kammer 3.2 zu verlängern und/oder die Strömungsrichtung des Fluids wiederholt abzulenken. Hierdurch kann die Sedimentationsleitung der Einrichtung 3 zum Sedimentieren und Abscheiden verbessert werden.
Die Ableiteinrichtung 3.3 für das Fluid taucht im Betriebsfall in das in der Kammer 3.2 angestaute Fluid ein, so dass in dem Fluid enthaltene aufschwimmende Stoffe nicht durch die Ableiteinrichtung 3.3 für das Fluid aus Kammer 3.2 ausgetragen werden.
Die Einrichtung 1 zum Entfernen bzw. Adsorbieren weist eine Zuleiteinrichtung 1.1, eine erste Kammer 1.2, eine zweite Kammer 1.4, eine dritte Kammer 1.6 und eine Ableiteinrichtung 1.7 auf.
In der zweiten Kammer 1.4 ist das Mittel 2 eingebracht.
Die Ableiteinrichtung 3.3 für das Fluid der Einrichtung 3 zum Sedimentieren und Abscheiden ist mit der Zuleiteinrichtung 1.1 der Einrichtung 1 zum Entfernen bzw. Adsorbieren verbunden, um Fluid von der Einrichtung 3 zum Sedimentieren von in dem Fluid enthaltenen sedimentierbaren Stoffen und zum Abscheiden von in dem Fluid enthaltenen aufschwimmenden Stoffen zu der Einrichtung 1 zum Entfernen bzw. Adsorbieren zu leiten.

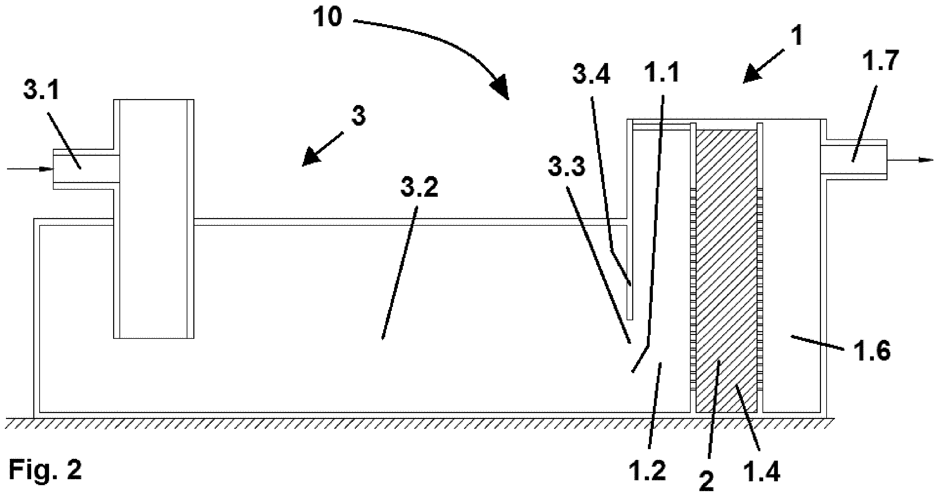

In Fig. 2 ist in einer schematischen Querschnittsansicht die Reinigungsvorrichtung 10 zur Reinigung eines Fluids in einem zweiten Ausführungsbeispiel gemäß vorliegender Erfindung gezeigt.
Die Bezugszeichen entsprechen den in Fig. 1 bereits genannten Bezugszeichen.
In der Einrichtung 3 zum Sedimentieren und Abscheiden wird die Kammer 3.2 zum Sedimentieren von in dem Fluid enthaltenen sedimentierbaren Stoffen an der Ableiteinrichtung 3.3 für das Fluid durch eine Tauchwand 3.4 abschnittsweise begrenzt.
Durch das Vorsehen der Tauchwand 3.4 können in dem Volumen der Kammer 3.2, das höher liegt, als die Unterkante der Tauchwand 3.4, im Fluid enthaltene aufschwimmende Stoffe aufgenommen werden. Je nach Bauausführung kann das dafür vorgesehene Volumen der Kammer mehrere Kubikmeter betragen. Die Kammer 3.2 kann einfach gereinigt werden, indem der Inhalt der Kammer beispielsweise durch die Zuleiteinrichtung 3.2 abgesaugt wird. Solche aufschwimmenden Stoffe sind beispielsweise Kohlenwasserstoffe, Öle, organische Materialien, wie Blütenpollen und der gleichen, sowie weitere.
Die Einrichtung 3 zum Sedimentieren und Abscheiden kann verbessert werden, indem an der Zuleiteinrichtung 3.2 ein Mittel angebracht wird, Grobstoffe zurückzuhalten. Dies kann beispielsweise ein Eimer oder ein Korb sein, mit dem es gelingt, Laub, Steine und anderes vom Fluid mitgenommene Material abzuscheiden und so nicht in die Kammer 3.2 der Einrichtung 3 zum Sedimentieren und Abscheiden gelangen zu lassen.
Auch kann an der Ableiteinrichtung 3.3 für das Fluid der Einrichtung 3 zum Sedimentieren und Abscheiden ein Filter in Form eines Sackes oder einer Haube angebracht sein, um nicht oder langsam sedimentierende Stoffe dort zurückzuhalten und nicht der Zuleiteinrichtung 1.1 der Einrichtung 1 zum Entfernen bzw. Adsorbieren zuzuleiten.
Die Reinigungsvorrichtung 10 ist in diesem Ausführungsbeispiel so gebildet, dass die Ableiteinrichtung 3.3 für das Fluid der Einrichtung 3 zum Sedimentieren und Abscheiden mit der Zuleiteinrichtung 1.1 der Einrichtung 1 zum Entfernen bzw. Adsorbieren eine Einheit bildet, diese also ineinander übergehen, d. h. die Ableiteinrichtung 3.3 für das Fluid der Einrichtung 3 zum Sedimentieren von in dem Fluid enthaltenen sedimentierbaren Stoffen bildet die Zuleiteinrichtung 1.1 der Einrichtung 1 zum Entfernen bzw. Adsorbieren.
Hierdurch ist es nicht notwendig eine Fluidverbindung - beispielsweise in Form eines Rohres oder Gerinnes - zwischen der Ableiteinrichtung 3.3 für das Fluid der Einrichtung 3 zum Sedimentieren und Abscheiden und der Zuleiteinrichtung 1.1 der Einrichtung 1 zum Entfernen bzw. Adsorbieren auszubilden.

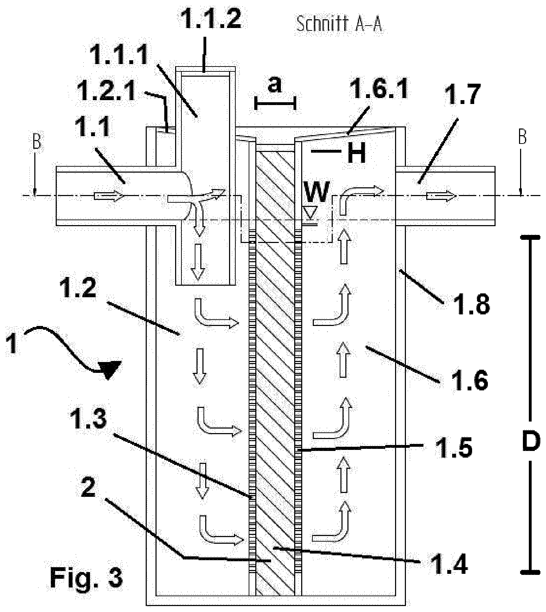

In Fig. 3 ist in einer schematischen Querschnittsansicht ein erstes Ausführungsbeispiel der Einrichtung 1 zum Entfernen bzw. Adsorbieren gezeigt.
Die Einrichtung 1 zum Entfernen bzw. Adsorbieren umfasst einen Behälter, der durch ein Gehäuse 1.8 gebildet ist.
Das Gehäuse 1.8 ist etwa als hohlzylindrisches Teil ausgebildet, das eine Bodenplatte aufweist die fluiddicht mit der Seitenwand verbunden ist.
Der Behälter weist eine Zuleiteinrichtung 1.1 auf, durch die ein Fluid in den Behälter einleitbar ist. Die Zuleiteinrichtung 1.1 ist in Form eines Rohrstückes, das die Gehäusewand 1.8 durchdringt, ausgebildet.
Die Zuleitung des Fluids kann - was hier nicht gezeigt ist - durch ein Rohr welches mit der Zuleiteinrichtung 1.1 verbunden ist oder beispielsweise durch ein Gerinne, das in die Zuleiteinrichtung 1.1 mündet, erfolgen.
Die Zuleiteinrichtung 1.1 mündet in die erste Kammer 1.2 der Einrichtung 1 zum Entfernen bzw. Adsorbieren.
Die Kammer 1.2 wird begrenzt durch die Wand des Gehäuses 1.8, durch einen Abschnitt der Bodenplatte des Gehäuses und durch die erste Wand 1.3.
Die erste Wand 1.3 begrenzt auf der der ersten Kammer 1.2 gegenüberliegenden Seite eine zweite Kammer 1.4. Die Kammer 1.4 wird weiterhin begrenzt durch die zweite Wand 1.5 und einen Abschnitt der Bodenplatte des Gehäuses 1.8.
In der zweiten Kammer 1.4 ist das Mittel 2 eingebracht bis etwa in Höhe der Markierung H. Die zweite Wand 1.5 begrenzt an ihrer der zweiten Kammer 1.4 gegenüberliegenden Seite die dritte Kammer 1.6.
Der Abstand zwischen der ersten Wand (1.3) und der zweiten Wand (1.5) ist mit dem Bezugszeichen a versehen.
Die dritte Kammer 1.6 wird weiterhin begrenzt durch die Wand des Gehäuses 1.8 und einen Abschnitt der Bodenplatte des Gehäuses.
Mit der dritten Kammer 1.6 in Fluidverbindung steht die Ableiteinrichtung 1.7, die als Rohrstutzen ausgebildet ist und die Wandung des Gehäuses 1.8 durchdringt.
Von der Ableiteinrichtung 1.7 kann das Fluid beispielsweise durch ein - hier nicht gezeigtes - an dieser angeschlossenes Rohr oder ein Gerinne, in das die Ableiteinrichtung 1.7 mündet, abgeleitet werden.
Wenn Fluid über die Zuleiteinrichtung 1.1 der Einrichtung 1 zum Entfernen bzw. Adsorbieren zuströmt, so nimmt dieses den durch Pfeile gekennzeichneten Weg von der Zuleiteinrichtung 1.1 durch die erste Kammer 1.2, von dort durch Öffnungen in der ersten Wand 1.3, durch die zweite Kammer 1.4, wobei es an dem Mittel 2 vorbeiströmt und mit diesem in Kontakt kommt, weiter durch die mit Öffnungen versehene zweite Wand 1.5 in die dritte Kammer 1.6 und von dort zur Ableiteinrichtung 1.7.
Bei einem Normalbetrieb stellt sich in der Einrichtung 1 zum Entfernen bzw. Adsorbieren ein Fluidspiegel ungefähr in Höhe der eingezeichneten gestrichelten Linie mit dem Bezugszeichen W ein.
Im gezeigten Ausführungsbeispiel gemäß Fig. 3 sind die Unterkante der Zuleiteinrichtung 1.1 und die Unterkante der Ableiteinrichtung 1.7 etwa in gleicher Höhe angeordnet.
In vorteilhafter Weise kann man bei einem Bau einer solchen Einrichtung 1 zum Entfernen bzw. Adsorbieren dafür sorgen, das zwischen der Zuleiteinrichtung 1.1 und der Ableiteinrichtung 1.7 ein Höhenversatz gegenüber der tieferliegenden Ableiteinrichtung 1.7 besteht, was den Fluss des Fluids durch die Einrichtung 1 zum Entfernen bzw. Adsorbieren verbessert. Dadurch erreicht man einen leichten Zu-, Durch- und Abfluss des Fluids durch die Einrichtung 1 zum Entfernen bzw. Adsorbieren.
An der Zuleiteinrichtung 1.1 ist eine Strömungsrichtungsablenkeinrichtung 1.1.1 angebracht. Diese ist in Form eines etwa T-förmigen Rohrabzweigs ausgebildet, wobei der nach oben weisende Abschnitt eines Rohres dieses Rohrabzweigs mit einem Deckel 1.1.2 verschlossen ist.
Mithilfe der Strömungsrichtungsablenkeinrichtung 1.1.1 gelingt es, die Strömung des zufließenden Fluids etwa um 90° abzulenken. Damit kann eine gegebenenfalls schädliche Wirkung von auf die erste Wand 1.3 treffende Fluidströmung vermieden werden.
Alternativ kann - was in der Fig. 3 nicht gezeigt ist - ein Prallblech an der ersten Wand 1.3 angeordnet sein, welches die Strömung des zufließenden Fluids ablenkt.
Außerdem kommt das in die erste Kammer 1.2 einströmende Fluid dadurch schneller zur Ruhe, so dass sedimentierbare Stoffe sich am Boden der ersten Kammer 1.2 absetzen können.
Die erste Kammer 1.2 ist an ihrer oberen Deckfläche mit einem fluiddichten Verschluss 1.2.1 verschlossen. Durch diesen fluiddichten Verschluss 1.2.1 an der oberen Deckfläche der ersten Kammer 1.2 kann bei einem Stauereignis, wenn also sehr viel Fluid der Einrichtung 1 zum Entfernen bzw. Adsorbieren zufließt, vermieden werden, das unkontrolliert Fluid aus der ersten Kammer 1.2 austritt und gegebenenfalls direkt in die dritte Kammer 1.6 unerwünscht überströmt.
Auch die zweite Kammer 1.4 ist an ihrer oberen Deckfläche mit einem Verschlusselement verschlossen, um zu vermeiden, dass in die zweite Kammer 1.4 beziehungsweise an das Mittel 2 zur Adsorption von Stoffen unerwünscht Schmutz gelangt.
Die dritte Kammer 1.6 ist an ihrer oberen Deckfläche ebenfalls mit einem Verschlusselement 1.6.1 fluiddicht verschlossen, so dass in doppelter Weise sichergestellt ist, dass bei einem Stauereignis nicht unerwünscht Fluid von der ersten Kammer 1.2 unerwünscht in die dritte Kammer 1.6 überströmt.
Es ist damit sichergestellt, dass das gesamte der Einrichtung 1 zum Entfernen bzw. Adsorbieren zufließende Fluid die zweite Kammer 1.4 und dort das Mittel 2 umströmen und mit diesem in Kontakt kommen muss, wodurch sich die Reinigungswirkung des Mittels 2 entfaltet und das Fluid nach Durchströmung der zweiten Kammer 1.4 gereinigt ist.
Die erste Wand 1.3 und die zweite Wand 1.5 sind in dem Bereich, der mit dem Bezugszeichen D gekennzeichnet ist, mit Öffnungen versehen, die den Durchtritt des Fluids durch die erste Wand 1.3 und die zweite Wand 1.5 gestatten.
Die Durchbrüche sind in ihrer Größe dabei so ausgelegt, dass das granulatförmig ausgebildete Mittel 2 nicht aus der zweiten Kammer 1.4 in die erste Kammer 1.2 oder die dritte Kammer 1.6 gelangen kann.
Die bevorzugte Ausführung dieser Durchbrüche sind Langlöcher mit einem Verhältnis von Breite zu Länge wie 1:5 bis 1:15, insbesondere wie 1:8 bis 1:12. Ganz besonders bevorzugt ist eine Ausführung, bei der die Langlöcher etwa 1 mm breit und etwa 10 mm lang ausgebildet sind. Hierdurch wird wirksam eine Verlegung oder Verstopfung der Durchbrüche durch das Granulat vermieden. Außerdem ist eine solche Bemessung der Durchbrüche sehr vorteilhaft im Hinblick auf den dann geringen Druckverlust der durch die erste 1.3 und zweite Wand 1.5 begrenzten zweiten Kammer 1.4.
Durch die Beladung der zweiten Kammer 1.4 mit dem Mittel 2 bis zur Beladungsmarkierung H oder mit einer vorgegebenen Beladungsmenge, die sich beispielsweise auf ein bestimmtes Volumen oder eine bestimmte Masse bezieht, ist sichergestellt, das auch über den am höchsten angeordneten Durchbrüchen in der ersten bzw. zweiten Wand 1.3, 1.5 noch weiteres Mittel 2 zur Verfügung steht. Diese Reserve stellt beispielsweise bei Setzungserscheinungen sicher, dass das die zweite Kammer 1.4 durchströmende Fluid auf jeden Fall mit dem Mittel 2 in Kontakt gerät, wodurch dieses seine Reinigungswirkung entfaltet.

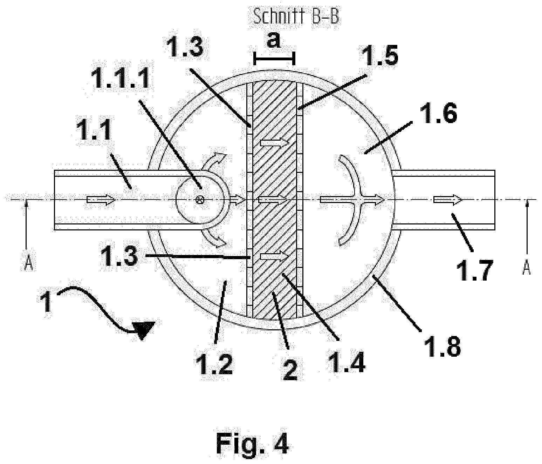

Die Fig. 3 stellt den Schnitt A-A aus Fig. 4 dar.

In Fig. 4 ist in einer schematischen geschnittenen Aufsichtsdarstellung die Einrichtung 1 zum Entfernen bzw. Adsorbieren gemäß einem ersten Ausführungsbeispiel gezeigt.
Die Fig. 4 entspricht dabei dem Schnitt B-B aus Fig. 3. Die Bezugszeichen entsprechen einander, so dass hier nicht erneut auf alle Einzelheiten einzugehen ist.

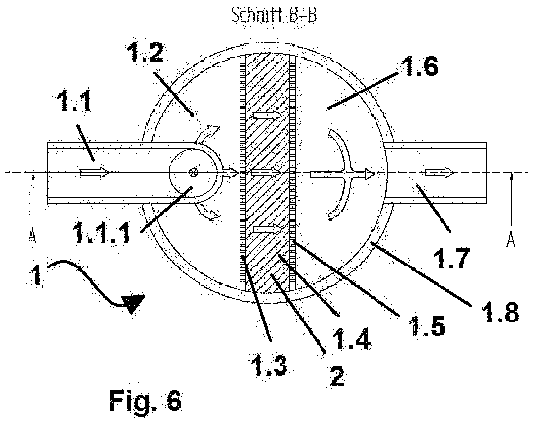

Die erste Wand 1.3 und die zweite Wand 1.5, die das Innenvolumen des Behälters im Wesentlichen in drei Kammern 1.2, 1.4, 1.6 unterteilen, erstrecken sich dabei von einer Innenwand des Gehäuses 1.8 zur gegenüberliegenden Innenwand.
Hierdurch ist eine große Anströmfläche für das in der zweiten Kammer 1.4 eingebrachte Mittel 2 genauso wie eine etwa gleich große Abströmfläche geschaffen, was sich positiv auf das Durchflussverhalten der Einrichtung 1 zum Entfernen bzw. Adsorbieren auswirkt.
Je nach Notwendigkeit kann die Größe der zweiten Kammer 1.4 und dadurch die Menge des Mittels 2, das für Reinigungszwecke zur Verfügung steht, variiert werden, indem die etwa parallel zueinander ausgerichtete erste Wand 1.3 und zweite Wand 1.5 entweder weiter auseinandergerückt oder näher beisammen ausgebildet sind. Ebenso ist es möglich, in einfacher Weise die Höhe des Gehäuses 1.8 und der Wände 1.3 und 1.5 so zu vergrößern, so dass mehr Mittel 2 für Reinigungszwecke zur Verfügung steht, aber auch die Anström- und Abströmfläche der zweiten Kammer 1.4 vergrößert ist. Damit kann in einfacher Weise die Einrichtung 1 zum Entfernen bzw. Adsorbieren zur Reinigung eines Fluids an die herrschenden Erfordernisse angepasst werden.
Der Abstand zwischen der ersten Wand (1.3) und der zweiten Wand (1.5) ist mit dem Bezugszeichen a versehen.

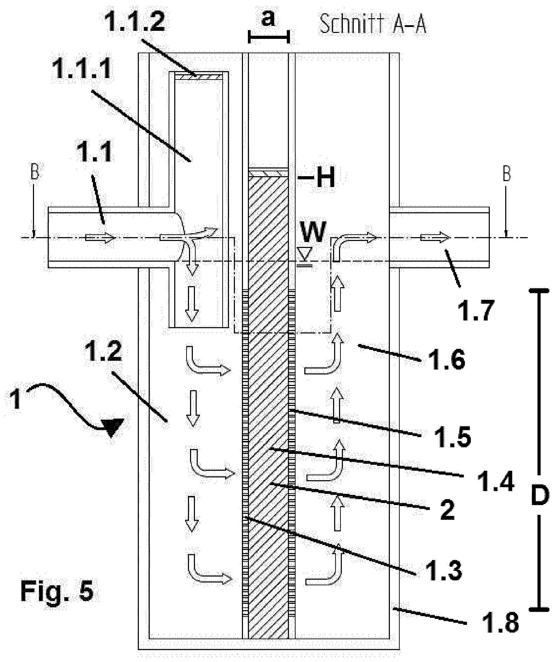

In Fig. 5 ist in einer schematischen Querschnittsansicht die Einrichtung 1 zum Entfernen bzw. Adsorbieren zur Reinigung eines Fluids in einem zweiten Ausführungsbeispiel außerhalb der Erfindung gezeigt.
Die Bezugszeichen entsprechen denen von Fig. 3, so dass hier nicht erneut auf alle Einzelheiten einzugehen ist.
Das zweite Ausführungsbeispiel außerhalb der Erfindung unterscheidet sich vom in den Fig. 3 und 4 dargestellten ersten Ausführungsbeispiel gemäß der vorliegenden Erfindung wie folgt:
Wie vorstehend ausgeführt, begrenzt die erste Wand 1.3 auf der der ersten Kammer 1.2 gegenüberliegenden Seite eine zweite Kammer 1.4. Die Kammer 1.4 wird weiterhin begrenzt durch die zweite Wand 1.5 und einen Abschnitt der Bodenplatte des Gehäuses.
Die erste Wand 1.3 weist eine Höhenerstreckung oberhalb des Fluidspiegels W auf, die etwa das 4-fache des Abstandes a der ersten Wand 1.3 von der zweiten Wand 1.5 beträgt. Auch die zweite Wand 1.5 weist diese Höhenerstreckung oberhalb des Fluidspiegels W auf, die ebenfalls etwa das 4-fache des Abstandes a der ersten Wand 1.3 von der zweiten Wand 1.5 beträgt.
Wie ebenfalls vorstehend ausgeführt weist die erste Wand 1.3 und die zweite Wand 1.5 nur im mit dem Bezugszeichen D versehenen Abschnitt Öffnungen auf, durch die das Fluid die Wände 1.3, 1.5 passieren kann. Oberhalb dieses bezeichneten Abschnitts sind keine Öffnungen in der ersten Wand 1.3 und der zweiten Wand 1.5 vorhanden, so dass dort kein Fluid die Wände 1.3, 1.5 passieren kann.
Mit dieser Maßnahme ist sichergestellt, dass ein in einer großen Menge zuströmendes Fluid nicht unkontrolliert von der ersten Kammer 1.2 in die dritte Kammer 1.6 strömen kann, ohne die zweite Kammer 1.4 und das Mittel 2 zur Reinigung des Fluids zu passieren.
Die erste Kammer 1.2 und die dritte Kammer 1.6 sind an ihren oberen Deckflächen offen. Die zweite Kammer 1.4 ist an ihrer oberen Deckfläche mit einem Verschlusselement verschlossen, um zu vermeiden, dass in die zweite Kammer 1.4 beziehungsweise an das Mittel 2 zur Adsorption von Stoffen unerwünscht Schmutz gelangt.
Das Gehäuse weist etwa dieselbe Höhe auf, wie die erste Wand 1.3 und die zweite Wand 1.5.
Auch in Fig. 5 ist der Weg des Fluids durch die Reinigungsvorrichtung 1 durch Pfeile angedeutet. Die Fig. 5 stellt den Schnitt A-A aus Fig. 6 dar.
In Fig. 6 ist in einer schematischen geschnittenen Aufsichtsdarstellung die Einrichtung 1 zum Entfernen bzw. Adsorbieren gemäß einem zweiten Ausführungsbeispiel außerhalb der Erfindung gezeigt.
Die Fig. 6 entspricht dabei dem Schnitt B-B aus Fig. 5. Die Bezugszeichen entsprechen einander, so dass hier nicht erneut auf alle Einzelheiten einzugehen ist.
Die Bezugszeichen entsprechen denen von Fig. 3, so dass hier nicht erneut auf alle Einzelheiten einzugehen ist.

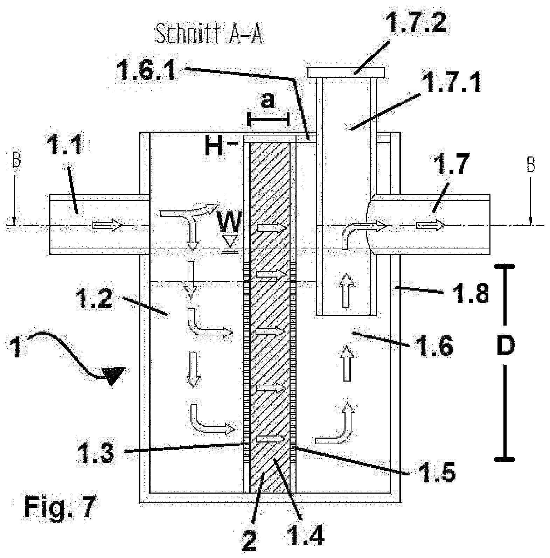

In Fig. 7 ist in einer schematischen Querschnittsansicht die Einrichtung 1 zum Entfernen bzw. Adsorbieren zur Reinigung eines Fluids in einem dritten Ausführungsbeispiel gemäß vorliegender Erfindung gezeigt.
Die Bezugszeichen entsprechen denen von Fig. 3, so dass hier nicht erneut auf alle Einzelheiten einzugehen ist.
Das dritte Ausführungsbeispiel der vorliegenden Erfindung unterscheidet sich vom in den Fig. 3 und 4 dargestellten ersten Ausführungsbeispiel wie folgt:
Die dritte Kammer 1.6 ist an ihrer oberen Deckfläche mit einem Verschlusselement 1.6.1 fluiddicht verschlossen, so dass sichergestellt ist, dass bei einem Stauereignis nicht unerwünscht Fluid von der ersten Kammer 1.2 unerwünscht in die dritte Kammer 1.6 überströmt. Die erste Kammer 1.2 ist an ihrer oberen Deckfläche offen.
Die zweite Kammer 1.4 ist an ihrer oberen Deckfläche mit einem Verschlusselement verschlossen, um zu vermeiden, dass in die zweite Kammer 1.4 beziehungsweise an das Mittel 2 zur Adsorption von Stoffen unerwünscht Schmutz gelangt.
An der Ableiteinrichtung 1.7 ist eine Strömungsrichtungsablenkeinrichtung 1.7.1 angebracht. Diese ist in Form eines etwa T-förmigen Rohrabzweigs ausgebildet, wobei der nach oben weisende Abschnitt eines Rohres dieses Rohrabzweigs mit einem Deckel 1.7.2 verschlossen ist.
Mithilfe der Strömungsrichtungsablenkeinrichtung 1.7.1 gelingt es, die Strömung des abfließenden Fluids etwa um 90° abzulenken. Damit kann eine Vergleichmäßigung der Fluidströmung erreicht werden.
Außerdem kommt das in die dritte Kammer 1.6 einströmende Fluid dadurch schneller zur Ruhe, so dass aufschwimmende Stoffe sich an der Oberfläche des Fluidspiegels in der dritten Kammer 1.6 sammeln können. Diese werden durch die Strömungsrichtungsablenkeinrichtung 1.7.1 nicht mit dem Fluid über die Ableiteinrichtung 1.7 aus der Reinigungsvorrichtung 1 ausgetragen, da das ableitende Rohrstück der Strömungsrichtungsablenkeinrichtung 1.7.1 in das Fluid in der Kammer 1.6 eintaucht.
Durch die Strömungsrichtungsablenkeinrichtung 1.7.1 ist ein Zugang zu der dritten Kammer 1.6 geschaffen, da die Strömungsrichtungsablenkeinrichtung 1.7.1 das an der oberen Deckfläche angeordnete Verschlusselement 1.6.1 durchstößt.
Dies kann vorteilhaft genutzt werden, um in der dritten Kammer 1.6 Inspektions-, Wartungs-, Reinigungs- und Reparaturarbeiten auszuführen.
So können die aufschwimmenden Stoffe beispielsweise durch einen Absaugvorgang aus der dritten Kammer 1.6 entfernt werden.
Auch in Fig. 7 ist der Weg des Fluids durch die Einrichtung 1 zum Entfernen bzw. Adsorbieren durch Pfeile angedeutet.

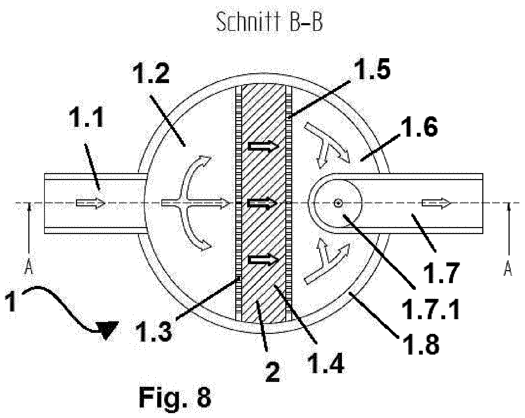

Die Fig. 7 stellt den Schnitt A-A aus Fig. 8 dar.

In Fig. 8 ist in einer schematischen geschnittenen Aufsichtsdarstellung die Einrichtung 1 zum Entfernen bzw. Adsorbieren gemäß einem dritten Ausführungsbeispiel gezeigt.
Die Fig. 8 entspricht dabei dem Schnitt B-B aus Fig. 7. Die Bezugszeichen entsprechen einander, so dass hier nicht erneut auf alle Einzelheiten einzugehen ist.

### Bezugszeichenliste

- 1: Einrichtung zum Entfernen bzw. Adsorbieren
- 1.1: Zuleiteinrichtung
- 1.1.1: Strömungsrichtungsablenkeinrichtung
- 1.1.2: Deckel
- 1.2: erste Kammer
- 1.2.1: fluiddichter Verschluss
- 1.3: erste Wand
- 1.4: zweite Kammer
- 1.5: zweite Wand
- 1.6: dritte Kammer
- 1.6.1: fluiddichter Verschluss
- 1.7: Ableiteinrichtung
- 1.7.1: Strömungsrichtungsablenkeinrichtung
- 1.7.2: Deckel
- 1.8: Gehäuse
- 2: Mittel
- 3: Einrichtung zum Sedimentieren und Abscheiden
- 3.1: Zuleiteinrichtung
- 3.2: Kammer
- 3.3: Ableiteinrichtung
- 3.4: Tauchwand
- 10: Reinigungsvorrichtung
- a: Abstand
- D: Abschnitt
- H: Beladungsmarkierung
- W: Fluidspiegel

## Patentansprüche

1. Reinigungsvorrichtung (10) zur Reinigung eines Fluids, umfassend eine Einrichtung (3) zum Sedimentieren von in dem Fluid enthaltenen sedimentierbaren Stoffen und zum Abscheiden von in dem Fluid enthaltenen aufschwimmenden Stoffen, die eine Zuleiteinrichtung (3.1) für das Fluid, eine Kammer (3.2) zum Sedimentieren von in dem Fluid enthaltenen sedimentierbaren Stoffen und zum Abscheiden von in dem Fluid enthaltenen aufschwimmenden Stoffen und eine Ableiteinrichtung (3.3) für das Fluid umfasst, und eine Einrichtung (1) zum Entfernen bzw. Adsorbieren von in dem Fluid enthaltenen Stoffen, umfassend einen Behälter mit einer Zuleiteinrichtung (1.1) für das Fluid, einer ersten Kammer (1.2), in die das Fluid aus der Zuleiteinrichtung (1.1) einströmt, einer zweiten Kammer (1.4), die von der ersten Kammer (1.2) durch eine erste Wand (1.3) abgetrennt ist, wobei die erste Wand (1.3) zumindest in einem Abschnitt D Öffnungen aufweist, durch die das Fluid von der ersten Kammer (1.2) in die zweite Kammer (1.4) einströmt, und einer dritten Kammer (1.6), die von der zweiten Kammer (1.4) durch eine zweite Wand (1.5) abgetrennt ist, wobei die zweite Wand (1.5) zumindest in einem Abschnitt D Öffnungen aufweist, durch die das Fluid von der zweiten Kammer (1.4) in die dritte Kammer (1.6) einströmt, und einer Ableiteinrichtung (1.7) für das Fluid, durch die das Fluid aus der dritten Kammer (1.6) ausströmt,
wobei die zweite Kammer (1.4) ein Mittel (2) enthält, Stoffe, insbesondere Ionen, aus dem Fluid zu entfernen,
**dadurch gekennzeichnet,**
**dass** die zweite Kammer (1.4) in einem hohlzylindrischen Gehäuse eingebaut ist, wobei sich die erste Wand (1.3) und die zweite Wand (1.5) von einer Innenseite des Gehäuses über die Achse des Hohlzylinders hinaus bis zur gegenüberliegenden Seite erstrecken,
**dass** eine Einrichtung vorgesehen ist, so dass das Fluid bei einem Stauereignis nicht von der ersten Kammer (1.2) in die dritte Kammer (1.6) strömt, ohne die zweite Kammer (1.4) zu durchströmen und mit dem Mittel (2) in Kontakt zu kommen, wobei besagte Einrichtung ein fluiddichter Verschluss (1.2.1) ist, der an der oberen Deckfläche der ersten Kammer (1.2) angeordnet ist und diese an ihrer oberen Deckfläche verschließt
und/oder die Einrichtung ein fluiddichter Verschluss (1.6.1) ist, der an der oberen Deckfläche der dritten Kammer (1.6) angeordnet ist und jene an ihrer oberen Deckfläche verschließt,
und **dadurch gekennzeichnet, dass** die erste Wand (1.3) derart ausgeführt ist,
dass das Fluid das Mittel (2) in der zweiten Kammer (1.4) dann durchströmt,
wenn die zweite Kammer (1.4) mit dem Mittel (2) vorgegeben beladen ist.

2. Reinigungsvorrichtung (10) zur Reinigung eines Fluids nach Anspruch 1, **dadurch gekennzeichnet, dass** in der Kammer (3.2) zum Sedimentieren und Abscheiden Einrichtungen vorgesehen sind, den Weg des Fluids durch die Kammer (3.2) zu verlängern und/oder die Strömungsrichtung des Fluids wiederholt abzulenken.

3. Reinigungsvorrichtung (10) zur Reinigung eines Fluids nach einem der vorangehenden Ansprüche, **dadurch gekennzeichnet, dass** das in der zweiten Kammer (1.4) der Einrichtung (1) zum Entfernen bzw. Adsorbieren enthaltene Mittel (2) zur Entfernung, insbesondere zur Adsorption von Stoffen ein Granulat ist, insbesondere ein Granulat auf Basis eines Oxids und/oder Hydroxids, insbesondere des Siliciums, des Eisens, des Mangans, oder des Aluminiums, oder ein Granulat auf Basis eines kohlehaltigen Materials, oder ein Granulat auf Basis eines Tonminerals, oder ein Granulat auf Basis eines Zeoliths, oder ein Granulat auf Basis einer Mischung der vorgenannten, wobei das Mittel (2) zur Entfernung, insbesondere zur Adsorption von Stoffen in die zweite Kammer (1.4) lose eingebracht oder in einem in die zweite Kammer (1.4) einführbaren und aus der zweiten Kammer (1.4) entnehmbaren Behältnis mit von dem Fluid durchströmbaren Seitenwänden angeordnet ist, und wobei die zweite Kammer (1.4) optional in zwei oder mehr Teilkammern unterteilt ist und in diesen Teilkammern unterschiedliche Mittel (2) zur Entfernung, insbesondere zur Adsorption von Stoffen enthalten sind, und dass optional wenigstens ein Filter, insbesondere eine Filterplatte oder ein Vlies derart in der zweiten Kammer (1.4) angeordnet ist, dass dieser in der zweiten Kammer (1.4) der ersten (1.3) und/oder der zweiten Wand (1.5) zugewandt ist.

4. Reinigungsvorrichtung (10) zur Reinigung eines Fluids nach einem der vorangehenden Ansprüche, **dadurch gekennzeichnet, dass** die erste Wand (1.3) und die zweite Wand (1.5) zumindest in einem Abschnitt D Öffnungen aufweist, wobei der Abschnitt der ersten (1.3) und der zweiten Wand (1.5) mit den Öffnungen so angeordnet ist, dass bei einer Beladung der zweiten Kammer (1.4) mit dem Mittel (2) bis zu einer vorgegebenen Beladungsmarkierung H und/oder mit einer vorgegebenen Beladungsmenge das die zweite Kammer (1.4) durchströmende Fluid mit dem Mittel (2) in Kontakt kommt.

5. Reinigungsvorrichtung (10) zur Reinigung eines Fluids nach einem der vorangehenden Ansprüche, **dadurch gekennzeichnet, dass** ein Grobfilter an der Zuleiteinrichtung (1.1) und / oder in der ersten Kammer (1.2) angeordnet ist und/oder dass ein Drosselelement an der Ableiteinrichtung (1.7) angeordnet ist und/oder dass ein Drosselelement an der Zuleiteinrichtung (3.1) angeordnet ist und/oder dass Einrichtungen (1.1.1, 1.7.1) vorgesehen sind, die Strömungsrichtung des durch die Zuleiteinrichtung (1.1) in die erste Kammer (1.2) einströmenden Fluids und/oder des durch die Ableiteinrichtung (1.7) aus der dritten Kammer (1.6) ausströmenden Fluids abzulenken und/oder dass Einrichtungen vorgesehen sind, durch die die Kammern (1.2, 1.4, 1.6) zugänglich sind.

6. Reinigungsvorrichtung (10) zur Reinigung eines Fluids nach einem der vorangehenden Ansprüche, **dadurch gekennzeichnet, dass** die Zuleiteinrichtung (3.1) für das Fluid, die Wände der Kammer (3.2) zum Sedimentieren und Abscheiden und die Ableiteinrichtung (3.3) für das Fluid und das den Behälter der Einrichtung (1) zum Entfernen bzw. Adsorbieren bildende Gehäuse (1.8), die Zuleiteinrichtung (1.1), die erste Wand (1.3), die zweite Wand (1.5) und die Ableiteinrichtung (1.7) ein Polymermaterial enthalten oder aus einem Polymermaterial bestehen, wobei das Polymermaterial bevorzugt ein thermoplastisches Polymermaterial, insbesondere eine Polyolefin, und ganz besonders bevorzugt ein Polypropylen, ein Polyethylen oder ein Polybutylen oder ein Copolymeres oder ein Blend oder eine Mischung der vorgenannten Polymermaterialien ist.

7. Fluidaufnahme-, -leit- und -reinigungseinrichtung mit wenigstens einer Reinigungsvorrichtung (10) zur Reinigung eines Fluids nach einem der Ansprüche 1 bis 6.

## Claims

1. Cleaning device (10) for cleaning a fluid, comprising an apparatus (3) for sedimenting sedimentable substances contained in the fluid and for separating floating substances contained in the fluid, which apparatus comprises a feed apparatus (3.1) for the fluid, a chamber (3.2) for sedimenting sedimentable substances contained in the fluid and for separating floating substances contained in the fluid, and a discharge apparatus (3.3) for the fluid, and comprising an apparatus (1) for removing or adsorbing substances contained in the fluid, which comprises a container comprising a feed apparatus (1.1) for the fluid, a first chamber (1.2), into which the fluid flows from the feed apparatus (1.1), a second chamber (1.4), which is separated from the first chamber (1.2) by a first wall (1.3), wherein the first wall (1.3) comprises openings at least in a portion D, through which openings the fluid flows from the first chamber (1.2) into the second chamber (1.4), and a third chamber (1.6), which is separated from the second chamber (1.4) by a second wall (1.5), wherein the second wall (1.5) comprises openings at least in a portion D, through which openings the fluid flows from the second chamber (1.4) into the third chamber (1.6), and a discharge apparatus (1.7) for the fluid, through which the fluid flows out of the third chamber (1.6), wherein the second chamber (1.4) contains an agent (2) for removing substances, in particular ions, from the fluid,
**characterised in that**
the second chamber (1.4) is installed in a hollow cylindrical housing, wherein the first wall (1.3) and the second wall (1.5) extend from one inner face of the housing, through the axis of the hollow cylinder, to the opposite side,
**in that** an apparatus is provided such that, if the fluid backs up, it does not flow from the first chamber (1.2) into the third chamber (1.6) without flowing through the second chamber (1.4) and coming into contact with the agent (2), wherein said apparatus is a fluid-tight seal (1.2.1) that is arranged on the upper cover surface of the first chamber (1.2) and seals said chamber at its upper cover surface and/or the apparatus is a fluid-tight seal (1.6.1) that is arranged on the upper cover surface of the third chamber (1.6) and seals said chamber at its upper cover surface,
and **characterised in that** the first wall (1.3) is designed such that the fluid flows through the agent (2) in the second chamber (1.4) when the second chamber (1.4) is loaded with the agent (2) in a predetermined manner.

2. Cleaning device (10) for cleaning a fluid according to claim 1, **characterised in that**, in the chamber (3.2) for sedimenting and separating, apparatuses are provided for lengthening the path of the fluid through the chamber (3.2) and/or for repeatedly diverting the flow direction of the fluid.

3. Cleaning device (10) for cleaning a fluid according to any of the preceding claims, **characterised in that** the agent (2) for removing, in particular for adsorbing substances, which is contained in the second chamber (1.4) of the apparatus (1) for removing or adsorbing is a granulate, in particular a granulate based on an oxide and/or hydroxide, in particular of silicon, iron, manganese, or aluminium, or a granulate based on a carbonaceous material, or a granulate based on a clay mineral, or a granulate based on a zeolite, or a granulate based on a mixture of the above-mentioned substances, wherein the agent (2) for removing, in particular for adsorbing substances, is introduced into the second chamber (1.4) in loose form or is arranged in a container that can be inserted into the second chamber (1.4), can be removed from the second chamber (1.4) and has side walls through which the fluid can flow, and wherein the second chamber (1.4) optionally is divided into two or more sub-chambers and different agents (2) for removing, in particular for adsorbing substances, being contained in said sub-chambers, and **in that**, optionally, at least one filter, in particular a filter plate or a non-woven material, is arranged in the second chamber (1.4) such that it faces the first wall (1.3) and/or the second wall (1.5) in the second chamber (1.4).

4. Cleaning device (10) for cleaning a fluid according to any of the preceding claims, **characterised in that** the first wall (1.3) and the second wall (1.5) comprise openings at least in one portion D, the portion of the first wall (1.3) and the second wall (1.5) comprising the openings being arranged such that, when the second chamber (1.4) is loaded with the agent (2) up to a predetermined loading marker H and/or with a predetermined loading amount, the fluid flowing through the second chamber (1.4) comes into contact with the agent (2).

5. Cleaning device (10) for cleaning a fluid according to any of the preceding claims, **characterised in that** a coarse filter is arranged on the feed apparatus (1.1) and/or in the first chamber (1.2) and/or **in that** a flow-control element is arranged on the discharge apparatus (1.7) and/or **in that** a flow-control element is arranged on the feed apparatus (3.1) and/or **in that** apparatuses (1.1.1, 1.7.1) are provided which divert the flow direction of the fluid flowing into the first chamber (1.2) through the feed apparatus (1.1) and/or of the fluid flowing out of the third chamber (1.6) through the discharge apparatus (1.7) and/or **in that** apparatuses are provided by means of which the chambers (1.2, 1.4, 1.6) are accessible.

6. Cleaning device (10) for cleaning a fluid according to any of the preceding claims, **characterised in that** the feed apparatus (3.1) for the fluid, the walls of the chamber (3.2) for sedimenting and separating, and the discharge apparatus (3.3) for the fluid, and the housing (1.8) forming the container of the apparatus (1) for removing or adsorbing, the feed apparatus (1.1), the first wall (1.3), the second wall (1.5), and the discharge apparatus (1.7) contain a polymer material or consist of a polymer material, wherein the polymer material preferably is a thermoplastic polymer material, in particular a polyolefin, and most particularly preferably is a polypropylene, a polyethylene or a polybutylene, or copolymer or a blend or a mixture of the above-mentioned polymer materials.

7. Fluid-receiving, fluid-conducting and fluid-cleaning apparatus comprising at least one cleaning device (10) for cleaning a fluid according to any of claims 1 to 6.

## Revendications

1. Dispositif de nettoyage (10) servant à nettoyer un fluide, comprenant un système (3) servant à la sédimentation de matières pouvant être sédimentées contenues dans le fluide et à la séparation de matières flottantes contenues dans le fluide, qui comprend un système d'arrivée (3.1) pour le fluide, une chambre (3.2) servant à la sédimentation de matières pouvant être sédimentées contenues dans le fluide et à la séparation de matières flottantes contenues dans le fluide et un système d'évacuation (3.3) pour le fluide, et un système (1) servant à l'élimination ou à l'adsorption de matières contenues dans le fluide, comprenant un contenant avec un système d'arrivée (1.1) pour le fluide, une première chambre (1.2), dans laquelle le fluide provenant du système d'arrivée (1.1) afflue, une deuxième chambre (1.4), qui est séparée de la première chambre (1.2) par une première paroi (1.3), dans lequel la première paroi (1.3) présente au moins dans une section D des ouvertures, par lesquelles le fluide afflue depuis la première chambre (1.2) dans la deuxième chambre (1.4), et une troisième chambre (1.6), qui est séparée de la deuxième chambre (1.4) par une deuxième paroi (1.5), dans lequel la deuxième paroi (1.5) présente au moins dans une section D des ouvertures, par lesquelles le fluide afflue depuis la deuxième chambre (1.4) dans la troisième chambre (1.6), et un système d'évacuation (1.7) pour le fluide, par lequel le fluide s'écoule hors de la troisième chambre (1.6),
dans lequel la deuxième chambre (1.4) contient un produit (2) pour éliminer des matières, en particulier des ions, du fluide,
**caractérisé en ce**
**que** la deuxième chambre (1.4) est montée dans un boîtier cylindrique creux, dans lequel la première paroi (1.3) et la deuxième paroi (1.5) s'étendent depuis un côté intérieur du boîtier au-delà de l'axe du cylindre creux jusqu'au côté opposé,
**qu'**un système est prévu de sorte que le fluide ne s'écoule pas dans le cas d'un embouteillage depuis la première chambre (1.2) dans la troisième chambre (1.6) sans traverser la deuxième chambre (1.4) et venir en contact avec le produit (2), dans lequel ledit système est une fermeture (1.2.1) étanche aux fluides, qui est disposée au niveau de la surface de couvercle supérieure de la première chambre (1.2) et ferme celle-ci au niveau de sa surface de couvercle supérieure, et/ou le système est une fermeture (1.6.1) étanche aux fluides, qui est disposée au niveau de la surface de couvercle supérieure de la troisième chambre (1.6) et ferme celle-ci au niveau de sa surface de couvercle supérieure,
et **caractérisé en ce que** la première paroi (1.3) est réalisée de telle manière que le fluide traverse le produit (2) dans la deuxième chambre (1.4) quand la deuxième chambre (1.4) est chargée de manière prédéfinie avec le produit (2).

2. Dispositif de nettoyage (10) servant à nettoyer un fluide selon la revendication 1, **caractérisé en ce que** sont prévus dans la chambre (3.2) servant à la sédimentation et à la séparation des systèmes pour prolonger le trajet du fluide à travers la chambre (3.2) et pour dévier de manière répétée le sens d'écoulement du fluide.

3. Dispositif de nettoyage (10) servant à nettoyer le fluide selon l'une quelconque des revendications précédentes, **caractérisé en ce que** le produit (2) contenu dans la deuxième chambre (1.4) du système (1) servant à l'élimination ou à l'adsorption, servant à éliminer, en particulier à adsorber, des matières est un granulat, en particulier un granulat à base d'un oxyde et/ou hydroxyde, en particulier à base de silicium, de fer, de manganèse ou d'aluminium, ou un granulat à base d'un matériau contenant du charbon, ou un granulat à base d'un minéral argileux, ou un granulat à base d'une zéolithe, ou un granulat à base d'un mélange des éléments susmentionnés, dans lequel le produit (2) servant à l'élimination, en particulier à l'adsorption, de matières est introduit en vrac dans la deuxième chambre (1.4) ou est disposé dans un récipient, pouvant être introduit dans la deuxième chambre (1.4) et pouvant être retiré de la deuxième chambre (1.4), avec des parois latérales pouvant être traversées par le fluide, et dans lequel la deuxième chambre (1.4) est divisée en option en deux chambres partielles ou plus et différents produits (2) servant à l'élimination, en particulier à l'adsorption, de matières sont contenus dans lesdites chambres partielles, et qu'en option au moins un filtre, en particulier une plaque filtrante ou un non-tissé, est disposé de telle manière dans la deuxième chambre (1.4) que celui-ci est tourné dans la deuxième chambre (1.4) vers la première (1.3) et/ou la deuxième paroi (1.5).

4. Dispositif de nettoyage (10) servant à nettoyer un fluide selon l'une quelconque des revendications précédentes, **caractérisé en ce que** la première paroi (1.3) et la deuxième paroi (1.5) présentent au moins dans une section D des ouvertures, dans lequel la section de la première (1.3) et de la deuxième paroi (1.5) avec les ouvertures est disposée de telle sorte que lors d'un chargement de la deuxième chambre (1.4) avec le produit (2) jusqu'à un repère de chargement H prédéfini et/ou avec une quantité de chargement prédéfinie, le fluide traversant la deuxième chambre (1.4) vient en contact avec le produit (2).

5. Dispositif de nettoyage (10) servant à nettoyer un fluide selon l'une quelconque des revendications précédentes, **caractérisé en ce qu'**un filtre grossier est disposé au niveau du système d'arrivée (1.1) et/ou dans la première chambre (1.2), et/ou qu'un élément d'étranglement est disposé au niveau du système d'évacuation (1.7), et/ou qu'un élément d'étranglement est disposé au niveau du système d'arrivée (3.1), et/ou que des systèmes (1.1.1, 1.7.1) sont prévus pour dévier le sens d'écoulement du fluide affluant à travers le système d'arrivée (1.1) dans la première chambre (1.2) et/ou du fluide s'écoulant hors de la troisième chambre (1.6) par le système d'évacuation (1.7), et/ou que sont prévus des systèmes, par lesquels les chambres (1.2, 1.4, 1.6) sont accessibles.

6. Dispositif de nettoyage (10) servant à nettoyer un fluide selon l'une quelconque des revendications précédentes, **caractérisé en ce que** le système d'arrivée (3.1) pour le fluide, les parois de la chambre (3.2) servant à la sédimentation et à la séparation et le système d'évacuation (3.3) pour le fluide et le boîtier (1.8) formant le contenant du système (1) servant à l'élimination ou à l'adsorption, le système d'arrivée (1.1), la première paroi (1.3), la deuxième paroi (1.5) et le système d'évacuation (1.7) contiennent un matériau polymère ou sont constitués d'un matériau polymère, dans lequel le matériau polymère est de manière préférée un matériau polymère thermoplastique, en particulier une polyoléfine, et de manière tout particulièrement préférée un polypropylène, un polyéthylène ou un polybutylène ou un copolymère ou un mélange des matériaux polymères susmentionnés.

7. Système de logement, d'acheminement et de nettoyage de fluide avec au moins un dispositif de nettoyage (10) servant à nettoyer un fluide selon l'une quelconque des revendications 1 à 6.
